# EUROPEAN PATENT SPECIFICATION

(11) **EP 2 129 820 B1**
(45) Date of publication and mention of the grant of the patent: **25.05.2011**
(21) Application number: 08734715.9
(22) Date of filing: 20.03.2008
(51) Int. Cl.: D04H 1/00, D04H 3/00, F23J 15/00

(54) **USE OF COAL COMBUSTION FLUE GAS FILTERS**
VERWENDUNG VON KOHLEVERBRENNUNGS-RAUCHGASFILTER
UTILISATION DE FILTRES À GAZ DE COMBUSTION DE CHARBON

(30) Priority: 23.03.2007 US 896567 P
(43) Date of publication of application: 09.12.2009
(73) Proprietor: Solvay Advanced Polymers, L.L.C., Alpharetta, GA 30005-3914 (US)
(72) Inventor: LOONEY, William, Walter, Sugar Hill, GA 30518 (US); BALENO, Brian, Alpharetta, GA 30004 (US); BRADEMEYER, Douglas, Cumming, GA 30040 (US)
(74) Representative: Jacques, Philippe
(86) International application number: PCT/EP2008/002287
(87) International publication number: WO 2008/116606

(56) References cited:
- EP-A- 0 471 093
- US-A- 4 574 144
- US-A- 5 149 581
- US-A- 5 205 968
- US-A- 5 290 906
- US-A- 5 762 798

## Description

### FIELD OF THE INVENTION

The present invention relates to new uses of filter assemblies and filtration systems incorporating such filter assemblies, in the filtration of flue gas from coal combustion.

### DESCRIPTION OF THE RELATED ART

The world's power demands are expected to rise of 60% by 2030. With the worldwide total of active coal-burning power generation plants over 50,000 and rising, the International Energy Agency estimates that fossil fuels will still account for 85% of the energy market by 2030. Coal is the most abundant fossil fuel and coal-burning power generation plants provide approximately 40% of the electrical energy used worldwide. World organizations and international agencies are concerned about the environmental impact of burning fossil fuels. The combustion of fossil fuels contributes to acid rain, global warming and air pollution due to the impurities and chemical composition of the fuels.

One of the main byproducts of coal-burning power plant operation, the flue gas from coal combustion, is discharged to the air through a flue gas stack. Flue gas contains carbon dioxide, nitrogen, oxygen and water vapor, as well as other substances such as nitrogen oxides, sulfur oxides, fly ash, mercury and low levels of uranium, thorium, and other naturally-occurring radioactive isotopes. Because of the hydrogen and nitrogen components of air, hydrides and nitrides, of carbon and sulfur, are also produced during the combustion of coal, along with other compounds including hydrogen cyanide (HCN), sulfur nitrate (SNO₃), hydrofluoric acid (HF), hydrochloric acid (HCl) and many other toxic substances.

Further, the emission of nitrogen and sulfur oxides into the air leads to the formation of acidic compounds such as sulfurous acid, nitric acid and sulfuric acid.

Another major danger related to coal combustion is the emission of solid particulate material entrained in the chemically aggressive flue gas described above. Examples of such solid material that are dangerous for public health include fly-ash, fine-fume type particles, various types of smoke, dust, etc that are not easily separated from the flue gas by gravitational force. Power plants generally remove particulate from the flue gas with the use of various fabric filtration materials, commonly known as bag houses. The flue gases flow into and through the fabric, leaving solid particulate materials inside. Capital costs of operating bag houses are high but their efficiency is excellent and so they have become very popular. However, the specific selection of fabrics used for the manufacture of bag houses can greatly affect the related efficiency and costs.

As bag houses are exposed for extended periods of time to the hot, abrasive and chemically aggressive environment of flue gas produced by coal-burning plants, materials used for their manufacture must be able to withstand such environment. In particular, they should be strong enough to take the pressure of the combusted fuel and erosive particles. Furthermore, these filters will also need to be cost effective, withstand corrosion, elevated heat, temperature transients and thermal shocks. Cement plants cause similar environmental impacts to the ones associated with coal-burning power generation plants since they also generally use coal as primary fuel.

RO119125 B1 describes filtration woven resisting metallurgy gases comprising a polyphenyl sulfone fiber yarn with diagonal cross connection and local yarn loosening resisting temperatures as high as 250°C and featuring good mechanical properties. However, metallurgy gases differ from the above described chemically aggressive coal combustion flue gas. The one skilled in the art would have thus not been motivated to transpose the use of metallurgy gases filters to coal combustion flue gas filters which require notably in addition to the good heat resistance and mechanical properties an outstanding chemical resistance, due to the particularly aggressive environment of coal combustion flue gas.

Polyphenylenesulphide (PPS) filters are commonly used as part of filter systems in the coal-fired power generation industry. Other materials are also used for the manufacture of hot gases filters. For example, AU2004202196 discloses fabrics for manufacturing bag filter for coal-fired power station, comprising PPS yarn in warp direction; and yarn made of polyacrylonitrile, polyimide and/or polyacrylonitrile-polyphenylenesulfide fibers, in weft direction

There are unfortunately a number of drawbacks, however, with existing hot gases filters when used for the filtration of coal combustion flue gas. For instance, the supply of certain polymers is potentially limited so that filter manufacturers would benefit from an alternative source of material. Further, certain filters, notably those made of PPS fibers, oxidatively degrade in acidic environments, such as the one related to coal combustion flue gas. When such materials are incorporated into filters, the oxidative breakdown can ultimately lead to clogged filter pores, reduced air flow and higher frequency of cleaning until filter replacement is required.

There is thus a need to provide improved filtering devices suitable for the filtration of coal combustion flue gas that would feature good tensile properties, hydrolytic stability, shrinkage and thermal resistance, while also performing outstanding chemical resistance, even at high temperatures. Such filters should further be made of a material easily shapeable into fibers. The specific selection of such material is thus crucial. Moreover, as explained above, it would be highly desirable that chosen materials withstand high temperatures as well as abrasive and chemically aggressive environments.

U.S. Pat. N° 5,762,798 discloses an asymmetrical, microporous, hollow fiber membrane made from a polymeric dope mixture of polysulfone and polyvinyl pyrrolidone dissolved in an aprotic solvent. The physical morphology of the hollow fiber membrane, i.e., the asymmetric microporous wall, is said to be rapidly formed by passing the polymeric dope mixture through an outer annular orifice of a tube-in-orifice spinneret while simultaneously passing a precipitating solution through the central tube of the spinneret. The emerging hollow fiber travels substantially downward for about 0.01-10 m before submersion into a quenching bath. The asymmetrical, microporous, hollow fiber membrane is said to be biocompatible and suitable for use in, for example, dialysis, hemodialysis, ultrafiltration, and water filtration applications.

U.S. Pat. N° 5,290,906 discloses A poly(arylene ether ketone) comprising recurring units represented by formula -Ph-C(O)-Ar¹-C(O)-Ph-O-Ar²-O-wherein Ar¹ denotes a 1,5-naphthalene ring, a 2,6-naphthalene ring, a 2,7-naphthalene ring or a combination of them, and Ar² denotes p-phenylene, p,p'-biphenylene, a 1,5-naphthalene ring, a 2,6-naphthalene ring, a 2,7-naphthalene ring or a combination of them. The poly(arylene ether ketone) is said to be high in second-order transition temperature and to be excellent in solvent resistance and moldability. It is further alleged that it can be molded into heat-resistant fibers and electric insulating films.

U.S. Pat. N° 5,205,968 discloses a process for preparing a microporous membrane from an unsulfonated poly(etheretherketone)-type polymer by forming a mixture of an unsulfonated poly(etheretherketone)-type polymer, an amorphous polymer, and a plasticizer, heating the resulting mixture, extruding or casting the mixture into a membrane, quenching or coagulating the membrane, and leaching the membrane, while optionally drawing the membrane before, during, and/or after leaching.

The present invention makes use of filter assemblies featuring excellent properties such as tensile properties, hydrolytic stability, thermal resistance, and outstanding chemical resistance that make them especially suitable for demanding applications targeting elevated temperatures, harsh chemical and abrasive environments.

### SUMMARY OF THE INVENTION

A first aspect of the present invention relates to the use of a filter assembly for the filtration of a coal combustion flue gas, as defined in claim 1. Another aspect of the present invention relates to the use of a filtration system for the filtration of a coal combustion flue gas, as defined in claim 8.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein :
Figure 1 is a diagram illustrating a filter assembly for use according to the present invention; and
Figure 2 is a diagram illustrating a filtration system for use according to the present invention.

### DETAILED DESCRIPTION OF THE INVENTION

The filter assembly used according to the present invention comprises a frame and a fabric mounted on said frame, and, passing through said filter assembly, a coal combustion flue gas. Said fabric comprises fibers (F) comprising at least one polymer material (P) selected from the group consisting of a poly(biphenyl ether sulfone) and blends of poly(biphenyl ether sulphone and poly(imide sulfone).

As used herein, the term "blend" refers to a physical combination of two or more different polymers. Usually, the different polymer components of the blend are diffused to some extent among each other inside the fiber (F), and, often, they are diffused intimately inside the fiber so that their individuality in the fiber is obscured.

As used herein, the term "polymer material" denotes indifferently a single polymer, or a blend composed of two or more polymers, as above defined.

The frame included in the filter assembly used according to the present invention may have different structures and different compositions, depending on the environment to which the filter assembly is to be submitted. It may be made of metal or polymer material, resistant to such harsh environment. It may notably be made of the same polymer material (P).

The fabric included in the filter assembly used according to the present invention is advantageously a filtering fabric. It can notably be non-woven or woven.

Fibers (F) can also further comprise one or more polymers (P*) other the polymer material (P). In the fiber (F), the weight ratio of polymer (P*) and of polymer material (P) [(P*):(P)] ranges usually from 0 to 5, preferably from 0 to less than 1.00, more preferably from 0 to 0.30 and still more preferably from 0 to 0.10. In certain embodiments of the present invention to which the preference may be given, the fiber (F) is essentially free, or even is free, of polymer (P*).

Fibers (F) can also further comprise one or more additional ingredients such as lubricants, mould releases, antistatic agents, flame retardants, antifogging agents, matting agents, pigments, dyes and optical brighteners.

The fabric may further comprise other conventional ingredients of fabrics, such as fibers other than the fiber (F). Non limitative examples of such fibers include : glass fibers; asbestos fibers; organic fibers formed from high temperature engineered resins like poly(benzothiazole) fibers, poly(benzimidazole) fibers, poly(benzoxazole) fibers, polyarylether fibers and aramide fibers; carbon fibers; PTFE fibers; boron fibers (e.g. obtained by deposition of boron microgranules on a tungsten or carbonate yarn); metal fibers; ceramic fibers like silicon nitride Si₃N₄; talc-glass fibers; calcium silicate fibers like wollastonite micro-fibers; silicon carbide fibers; metal borides fibers (e.g. TiB₂) and mixtures thereof; the carbon fibers can be obtained notably by heat treatment and pyrolysis of different polymeric precursors such as, for example, rayon, polyacrylonitrile (PAN), aromatic polyamide or phenolic resin ; other carbon fibers useful for the present invention can be obtained from pitchy materials. The term "graphite fiber" intends to denote carbon fibers obtained by high temperature pyrolysis (over 2000°C) of carbon fibers, wherein the carbon atoms place in a way similar to the graphite structure. Certain carbon fibers useful for the present invention are chosen from the group composed of PAN based carbon fibers, pitch based carbon fibers, graphite fibers, and mixtures thereof.

The fibers (F) can notably be made with a melt-spinning method. In such a method, pellets (or a powder) of polymer materials (P) can be pre-dried. The pellets are then fed into an extruder. The extruded polymer material (P) is melted and the melted polymer material (P) is passed through die holes. The strands of fibers can be pulled from the die holes using for example a series of rollers. The pulled strands can then be rolled on a reel. The viscosity, strength and extensibility of the strands can be controlled by varying different parameters, such as the level of additives in the polymer material (P), the polymer molecular weight, molecular weight distribution and molecular architecture. These flow parameters can also be controlled by temperature and shear conditions, such as the speed of pull by the rollers.

The melt-spin process works particularly well for resins that can be readily melt processed in general, and will lend themselves to melt spinning. Preferably, polymer materials (P) that are melt-spun are relatively clean (free of contaminants such as gels, black specs, char, etc).

A system for manufacturing the fibers (F) can include an extruder, for example a 1.5" diameter extruder. The extruder can feed two melt pumps, each feeding a die with clusters of die holes. For example, each melt pump can feed two clusters of 20 die holes, each 0.8 mm in diameter. The strands of fibers can be pulled by a set of rollers. The pulling linear velocity of the initial set of rollers can be for example about 600 m/min. Successive sets of rollers can further pull the strand, for example by increasing the pulling linear velocity for each successive set of rollers. For example, the forth set of rollers can have a pulling linear velocity of about 900 m/min. The pulled strands can then be rolled on a high speed reel.

The fibers (F) are not limited to the above method and system. For example, it is possible to manufacture the fibers (F) using a solvent to dissolve the polymer material (P) before spinning. This solvent-based method provides the advantage of not requiring elevated temperature to melt the polymer material (P). This method may be well suited for polymer materials (P) that are relatively difficult to handle and/or that react to heat. Fibers (F) may also be surface active fibers. A surface active fiber, i.e., providing active chemistry on its surface, might be produced through solution spinning. For example, fiber including a hydroxyl, amine, siloxane etc type of active group can be manufactured with a solution spinning method. In addition, if a second material, such as an additive, cannot withstand the melt temperatures of the first material, solution spinning can be used to manufacture a fiber including both materials. On the other hand, the melt-spinning method provides a fluid polymer material (P) without the use of a solvent, which can be beneficial because solvents can require additional steps in order to comply with environmental concerns.

The fibers (F) can also be made using a spun-bond process. Spun-bonded fabrics are non woven fabrics formed by filaments which have been extruded drawn, and then laid down on a continuous belt. Bonding can be accomplished by several methods such as hot-calendering or by passing the web through a saturated steam chamber at elevated temperature. A spun fabric is a fabric made from staple fibers which may contain one or a mixture of two or more fiber types. A spun-laced fabric is a non-woven fabric produced by entangling fibers in a repeating pattern to form a strong fabric free of binders. A staple can be made up of natural fibers or cut lengths of fiber from filaments. The staple length can vary from less than one inch to several feet. Man-made staple fibers can be cut to a definite length so that they can be processed in spinning systems. The term staple is used in the textile industry to distinguish cut fiber from filaments. Melt blown can be thought of as molten resin forced thru small orifices and 'blown' down onto a substrate or conveyor belt. This can be done in a random way making a non-woven or felt-like swatch of material.

The fibers (F) can have any number of profiles, including but not limited to lobes, stripes, segments, etc. The fibers (F) can also be made with one or multiple resins. For example, one resin can form the core of the fiber and another resin can form the shell of the fiber. The fibers (F) can produce fibers within a very broad range in diameter, with a number average diameter generally from as low as 1 nm to as high as 100 µm. The fibers (F) may be notably nanofibers, i.e. fibers the number average diameter of which is below 1 µm (1000 nm) ; nanofibers may have a number average diameter of at least 2, 5, 10, 20; 50, 100 or 200 nm ; nanofibers may have a number average diameter of at most 500, 200, 100, 50, 20 or 10 nm. The fibers (F) may also be microfibers, i.e. fibers the number average diameter of which is of at least 1 µm (1000 nm) ; microfibers may have a number average diameter of at least 2, 4, 8 or 12 µm ; microfibers may have a number average diameter of at most 50, 30 or 20 µm. In certain embodiments, preferred fibers have a number average diameter ranging from 12 to 20 µm.The number average length of the fibers (F) is advantageously of at least 10 cm, preferably of at least 25 mm and more preferably of at least 50 mm. Fibers with a number average length of at least 50 mm have good filtration efficiency. The number average length of the fibers (F) is not particularly restricted. It can be of at most 100, 200 or 500 mm, but it can also be much higher as it is the case with continuous fibers. Still other diameters and lengths are possible.

With a two component system, many (often, at least 100) strands (e.g., 600) of one polymer material (P) can be formed in a matrix of a polymer material (P2) different from polymer material (P), all totaling a few microns in number average diameter (often, at least 2.0 µm), e.g., 10 µm. Such a technique is sometimes referred to as the "islands in the sea" technique. If the matrix polymer material (P2) is washed away (e.g. it is dissolved by a solvent), one can obtain as many nanofibers as the number of strands formed in the matrix (here, 600 nanofibers).

Generally, the fibers (F) can have diameters from nanometers to millimeters and can be very short to reels in length. A fiber is a unit of material which forms the basic element of fabrics or textile structures. The fibers (F) can have a number average length at least 10,100,1,000 or, in certain instances, even 10,000 times its number average diameter.

Further, the fibers (F) can have different cross-sectional profiles, such as circular, oval, star-like, core/shell, etc. The Applicant is of the opinion that, in certain embodiments of the present invention, non-circular fiber profiles of the fibers, in particular the star-like profile, are preferred, because they provide enhanced filtration capabilities.

In addition, the fibers (F) can have a waviness (or crimps per unit length) taking different values, for example, 11-12 crimps/inch. Other crimp values are possible.

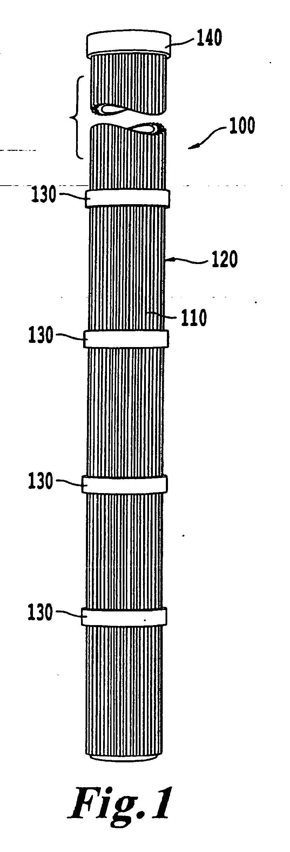

As seen in Fig. 1, the filter assembly 100 includes a filtering fabric (typically, a bag) made of fibers 110. The filtering fabric can be felt, or non-woven, fabric, as well as woven fabric, made from the fibers 110. In a preferred embodiment, the filtering fabric 120 incorporates fibers 110 made of poly(biphenyl ether sulfone)s, for example polyphenylsulfone, such as a RADEL^{®} R polymer. In another preferred embodiment, the filtering fabric 120 incorporates fibers 110 made of a blend of poly(biphenyl ether sulfone) and poly(imide sulfone). In yet another preferred embodiment, the filtering fabric 120 is free of poly(phenylene sulphide) fibers.

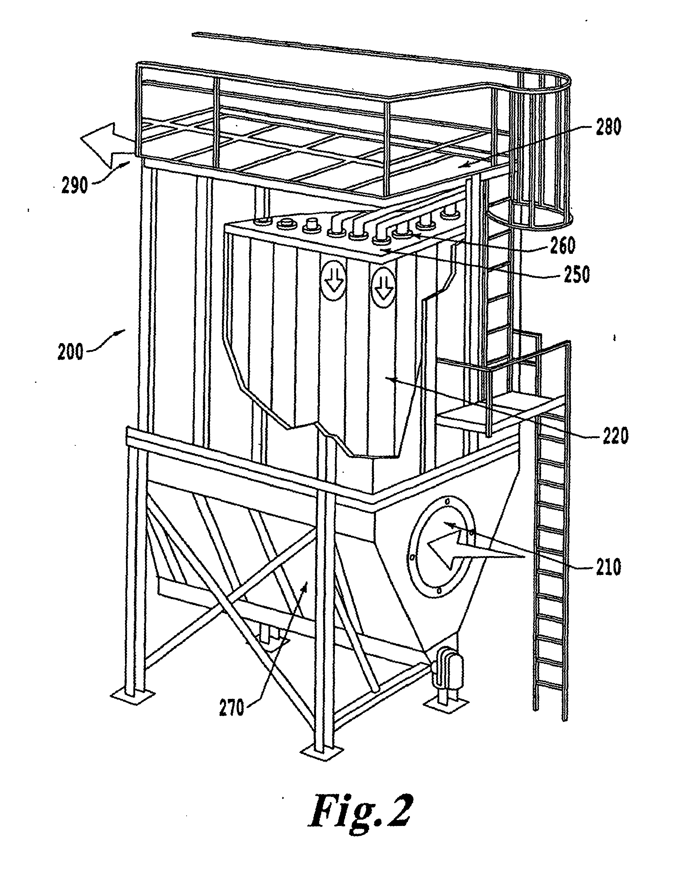

The filter assembly 100 can filter particulates from a particulate laden gas as the gas passes through each filter assembly 100. Each filter assembly 100 can be supported at its upper end by a flange 140 coupled to a tube sheet 250 of the filtration system 200 (Fig. 2) and can hang downwardly in a substantially vertical direction. The flange 140 can bear the weight of the filter assembly 100 when attached to the tube sheet 250. The flange is made from a suitable material, such as stamped, drawn or otherwise formed metal.

The length of the filter assembly 100 can vary, for example from a few centimeters to a few meters. Also, the filter assemblies 100 can be connected in series. For example, the filter assemblies 100 can be modules of a filtration system made of several filter assemblies. The filter assembly 100 is preferably open on both ends. Alternatively, the filter assembly 100 can be closed at one or both ends. The filter assembly 100 can have any suitable configuration cross-section, such as for example circular, oval or square.

The filtering fabric 120 is mounted on a frame 130 configured to support the filtering fabric 120 in a radial direction. The frame 130 can include support rings sewn into the filtering fabric 120. Alternatively, or in addition, the frame 130 can include a support cage or a perforated tube on which the filtering fabric 120 is mounted. The support rings 130 and/or the support cage and/or the tube can be made of metal, perforated sheet metal, expanded metal or mesh screen, or other suitable materials. The support rings, tube and/or cage can be coupled to the flange 140.

The filtering fabric 120 can be formed in a substantially tubular shape. Preferably, the filtering fabric 120 includes a pleaded element with accordion folds at its inner and outer peripheries. The filtering fabric 120 can be attached to the flange and/or support rings/cage/tube, for example via a potting material.

The filter assembly 100 can be incorporated, for example, in a filtration system, or baghouse, of a coal-fired power generation plant or a cement plant. In that respect, the filter assembly 100 could replace the presently commonly used filter assemblies comprising poly(phenylene sulphide) fibers. The fibers 110 can thus provide an alternative source of material to address the limited supply of conventional materials used in industrial filter assemblies, which need to be periodically replaced. The fibers 110 can also provide a filter assembly 100 that can sustain high operating temperatures and acidic environments.

As discussed above, the fibers 110 can be made out of poly(biphenyl ether sulfone) or blends of poly(biphenyl ether sulfone) and poly(imide sulfone). In this case, the fibers 110 have such chemical compositions that they can provide a stronger resistance to oxidation compared to poly(phenylene sulphide). The fibers 110 also present a resistance to hydrolysis. Thus, in extreme environments of high temperature and/or acidic and/or basic atmosphere, the filter assembly 100 for use according to the present invention can offer a number of benefits for industrial filter assemblies. In particular, the RADEL^{®} R fibers 110 do not breakdown oxidatively, and thus improve the longevity of the filter assembly 100, which does not clog up as quickly and need not be replaced as frequently.

The filter assembly 100 can operate at higher temperatures, thus providing improved operational efficiencies of the overall unit. The filter assembly 100 can be operated through more shaker cycles thereby extending the filter assembly life. Further, the physical attributes of the fibers 110 provide new and improved design options allowing for even further filtration improvements.

Coal combustion flue gas contains typically well above 5 vol. % of CO₂, very often above 10 vol. % of CO₂, and often 12.5 vol. % CO₂ or more. It generally also comprises more than 400, 600, 800, 1000, 1200 or even 1400 ppm of sulfur oxides (SOₓ), and more than 125, 250, 375 or even 500 ppm of nitrogen oxides (NOₓ), depending on the coal composition. "SOₓ" is a general term given to a mixture of sulfur oxides, the two major components of which are sulfur dioxide (SO₂) and sulfur trioxide (SO₃). On the other hand, "NOₓ" is a general term given to a mixture of nitrogen oxides, the two major components of which are nitric oxide (NO) and nitrogen dioxide (NO₂). Coal combustion flue gas has a solid particle loading typically well above 10 µg/ m₀³ or even well above 100 µg/m₀³ (m₀³ = m³ at 273 K and 1013 mbar), very much often above 1 mg/ m₀³ (M₀³ = m³ at 273 K and 1013 mbar), very often above 5 mg/ m₀³ and often above 15 mg/ m₀³ ; it can sometimes be of at least 20, or even at least 25 mg/ m₀³.

The filter assembly for use according to the present invention advantageously does not breakdown oxidatively in the presence of coal combustion flue gas, and in particular in the presence of nitric acid or sulfuric acid, that are produced from the sulfur and nitrogen oxides. Moreover, the filter assembly for use according to the present invention advantageously does not breakdown in a coal combustion flue gas stack environment, which is typically above 125°C, 150°C, 170°C, 200°C, 220°C or even higher, depending on the distance to the combustion zone, i.e. the exact location of the filter in the flue gas stack.

The filter assembly for use according to the present invention may also comprise surface active fibers.

The filter assembly for use according to the present invention is particularly well suited for the filtration of coal burning power generation plant flue gas.

### Description of the filtration systems incorporating the filter assemblies

The filtration system for use according to the present invention comprises a plurality of filter assemblies, at least one of them being the filter assembly as above described, said filtration system further comprising a gas inlet receiving the coal combustion flue gas. In a preferred embodiment, each of the filter assemblies of the filtration system for use according to the present invention is as above described.

Figure 2 is a diagram illustrating a non-limiting embodiment of a filtration system (or scrubber system, or baghouse) 200 for use according to the present invention including filter assemblies 100 with fibers 110. This filtration system 200 can be incorporated in a coal-fired power generation plant or in a processing plant, such as a rock and/or cement plants ad steel and/or coke mills. The filtration system 200 includes a gas inlet 210, in which flue gas to be filtered is inserted. The gas is then

passed through multiple filter assemblies (or filter bags) 220. Each of the filter assemblies 220 can be similar to the filter assemblies 100 with filtering fabric 120 shown in Fig. 1, but other configurations are possible. The filter assemblies 220 include a fabric made of fibers, such as fibers 110. The filter assemblies 220 can be attached to the tube sheet 250 via their flanges. The filter assemblies 220 can hang vertically inside the unit and can be held in place by clamps, snapbands or hold-downs. The filter assemblies 220 can trap various components from the flue gas, including fly ash, sulfur dioxide, SO₃, CO₂, mercury, nitrogen dioxide, and other pollution molecules and combustion residues. The filter assemblies 220 can trap these components mechanically and/or chemically, for example via a surface active fiber. The filtered gas then exits the filtration system 200 via gas outlet 290.

The filter assemblies 220 can function in a high temperature environment, for example around 170°C, and in an acidic environment (e.g., in the presence of sulfuric acid or nitric acid) for an extended amount of time (e.g., three or more years). During this time, the filter assemblies 220 can be regularly cleaned, or discharged of debris, via some type of agitation system, such as a pulse jet, a shaker system, reverse air or some mixture thereof. For example, the filtration system 200 can include a pulse jet system 260 configured to generate a blast of compressed air, which is injected into the top of the opening of the filter assemblies 220. The air can be supplied from a blowpipe which feeds into venturies located above the filter assembly. The air blast creates a shock wave that causes the bag to flex and particulate to release into a hopper 270 below. Because of the accumulation of debris over time, the agitation of the filter assemblies, and the rough environment, the filter assemblies 220 age and eventually need to be replaced. The filter assemblies can be serviced and replaced via top access hatches 280.

A filtration system 200 can include thousands of such filter assemblies 220. For example, in a coal burning power generation plant, a filtration system 200 can include 10,000 filter assemblies 220, representing thousands of pounds of fibers. Thus, when the filters clog up and need to be replaced, the cost of such replacement can be great. This is another reason why increasing the longevity of the filters can be particularly beneficial in these applications, and why the filtration systems for use in the present invention can lead to significant cost efficiencies.

Another aspect of the present invention is directed to the use of a filter assembly comprising a frame and a fabric mounted on said frame, wherein said fabric comprises fibers (F) comprising at least one polymer material (P) selected from the group consisting of a poly(biphenyl ether sulfone) and blends of poly(biphenyl ether sulfone) and poly(imide sulfone) for the filtration of coal combustion flue gas.

Said combustion flue gas may be a coal burning power generation plant flue gas, and may typically comprises more than 400 ppm of sulfur oxides and more than 125 ppm of nitrogen oxides.

### The polymer material (P)

Polymer material (P) is selected from the group consisting of a poly(biphenyl ether sulfone)) and blends of poly(biphenyl ether sulfone) and poly(imide sulfone).

### The poly(biphenyl ether sulfone)

As described in the U.S. Provisional Application S.N. 60/835,430, the term "poly(biphenyl ether sulfone)" is intended to denote a polycondensate of which more than 50 wt. % of the recurring units are recurring units (R1) of one or more formulae containing at least one p-biphenylene group : 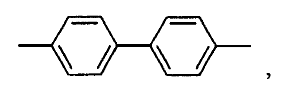 at least one ether group (-O-) and at least one sulfone group (-SO₂-).

Preferably, recurring units (R1) are recurring units of one or more formulae of the general type : 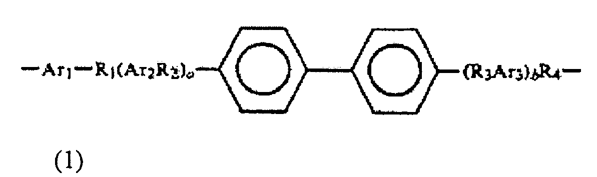 wherein R₁ through R₄ are -O-, -SO₂-, -S-, -CO-, with the proviso that at least one of R₁ through R₄ is -SO₂- and at least one of R₁ through R₄ is -O- ; Ar₁, Ar₂ and Ar₃ are arylene groups containing 6 to 24 carbon atoms, and are preferably phenylene or p-biphenylene; and a and b are either 0 or 1.

More preferably, recurring units (R1) are chosen from 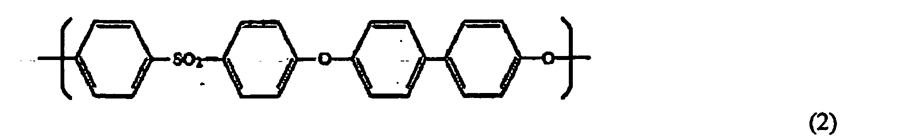 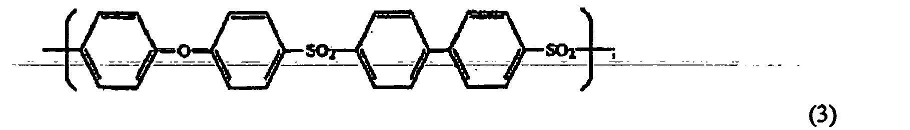 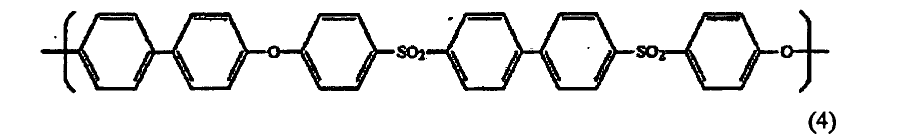 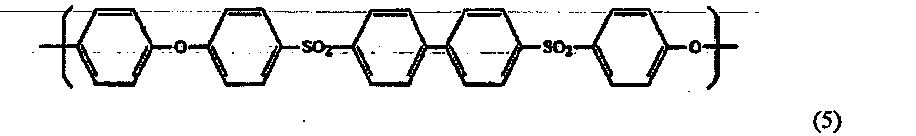 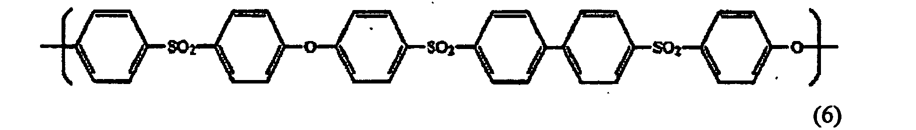 and mixtures thereof.

Still more preferably, recurring units (R1) are either 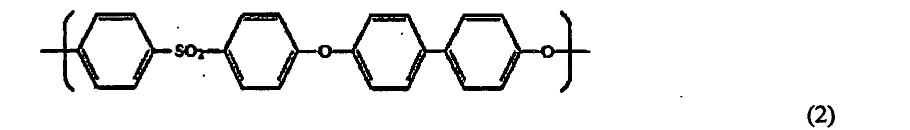 or 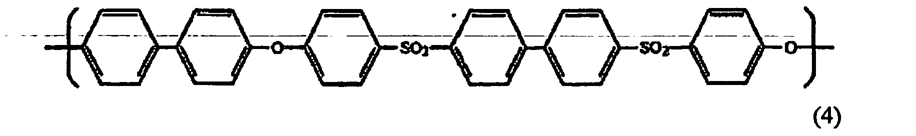 or a mix of 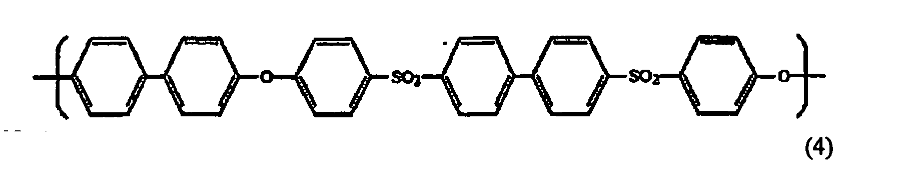 with 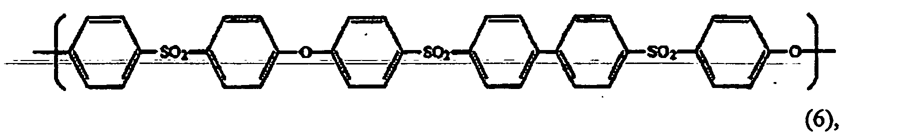 wherein the weight amount of the recurring units (6) contained in the mix, based on the total amount of the recurring units (4) and (6) of which the mix consists, is between 10 and 99 %, and preferably between 50 and 95 %.

The best properties may be achieved when using recurring units (4) or a mix of recurring units (4) and (6) as recurring units (R1). On the other hand, using recurring units (2) as recurring units (R1) provides in general the best overall cost-properties balance, and the highest level of toughness. For the purpose of the present invention, a polyphenylsulfone is intended to denote any polycondensation polymer of which more than 50 wt. % of the recurring units are recurring units (R1) of formula (2).

The poly(biphenyl ether sulfone) may be.notably a homopolymer, a random, alternating or block copolymer. When the poly(biphenyl ether sulfone) is a copolymer, its recurring units may notably be composed of (i) recurring units (R1) of at least two different formulae chosen from formulae (2), (3), (4), (5) or (6), or (ii) recurring units (R1) of one or more formulae chosen from formulae (2), (3), (4), (5) or (6) (especially, recurring units of formula (2)) and recurring units (R1*), different from recurring units (R1), such as : 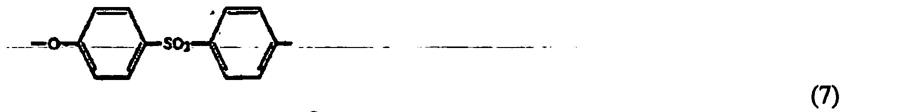 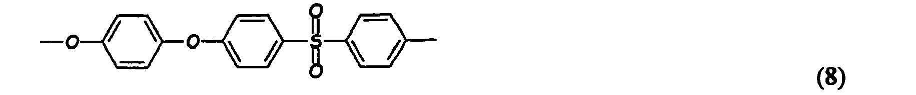 and

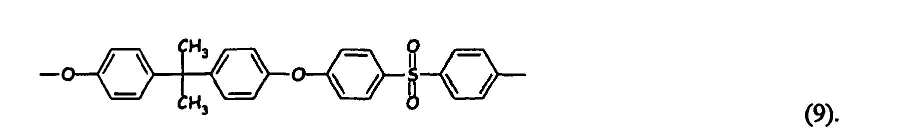

Preferably more than 70 wt. %, more preferably more than 85 wt. % of the recurring units of the poly(biphenyl ether sulfone) are recurring units (R1). Still more preferably, essentially all the recurring units of the poly(biphenyl ether sulfone) are recurring units (R1). Most preferably, all the recurring units of the poly(biphenyl ether sulfone) are recurring units (R1).

Excellent results are in general obtained when the poly(biphenyl ether sulfone) is a polyphenylsulfone homopolymer, i.e. a polymer of which essentially all, if not all, the recurring units are of formula (2). RADEL^{®} R polyphenylsulfone from Solvay Advanced Polymers, L.L.C. is an example of a polyphenylsulfone homopolymer.

### The poly(imide sulfone)s

To the purpose of the present invention, a poly(imide sulfone) is intended to denote imide-containing, sulfone-containing polymer comprising structural units (R2) having the general formula (I) : 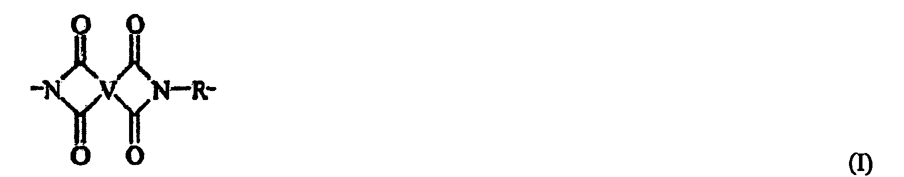 wherein V is a tetravalent linker without limitation, as long as the linker does not impede synthesis or use of the poly(imide sulfone) ; and R in formula (I) is a substituted or unsubstituted divalent organic radical without limitation, as long as the divalent organic radical does not impede synthesis or use of the poly(imide sulfone).

The poly(imide sulfone) comprises generally above 5 wt. %, preferably above 50 wt. %, and more preferably above 90 wt. % of structural units (R2), based on the total weight of the poly(imide sulfone). Still more preferably, the poly(imide sulfone) is a poly(imide sulfone) homopolymer, i.e. essentially all, if not all, the structural units of the poly(imide sulfone) are structural units (R2).

The number of structural units (R2) per polymer chain is, by definition of a polymer, above 1 ; it is typically from about 10 to about 1000 or more, and preferably from about 10 to about 500.

Suitable linkers include but are not limited to : (a) substituted or unsubstituted, saturated, unsaturated or aromatic monocyclic or polycyclic groups having about 5 to about 50 carbon atoms, (b) substituted or unsubstituted, linear or branched, saturated or unsaturated alkyl groups having 1 to about 30 carbon atoms; or mixtures thereof. Preferred linkers include but are not limited to tetravalent aromatic radicals, such as 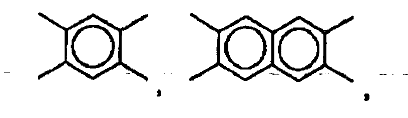 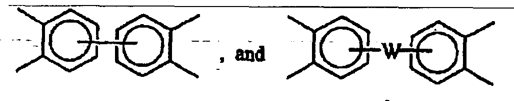 wherein W is in some embodiments a divalent moiety selected from the group consisting of-O-,-S-,-C(O)-,-SO₂-, -C_{y}H_{2y}- (y being an integer from 1 to 5), and halogenated derivatives thereof, including perfluoroalkylene groups, or a group of the formula-O-D-O-wherein the divalent bonds of the-O-or the-O-D-O-group are in the 3,3', 3,4', 4,3', or the 4, 4' positions, and wherein D comprises divalent radicals of formulae : 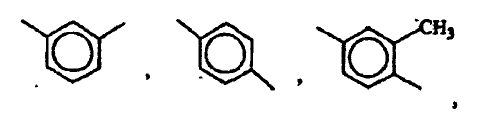 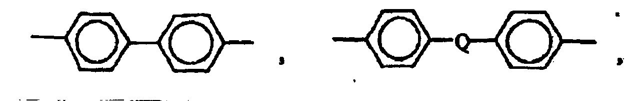 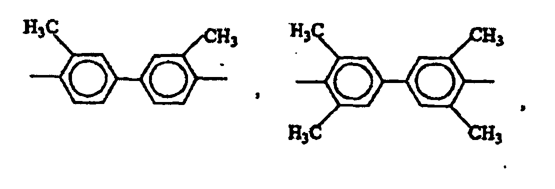 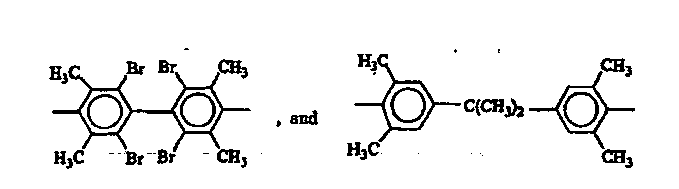 wherein Q in above formula 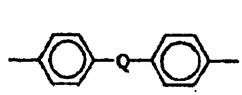 includes but is not limited to a divalent moiety-selected from the group consisting of-O-,-S-,-C (O)-,-SO₂-, - C_{y}H_{2y}- (y being an integer from 1 to 5) such as -C(CH₃)₂-, and halogenated derivatives thereof, including perfluoroalkylene groups.

Groups free of benzylic protons are often preferred for superior melt stability.

R in formula (I) includes but is not limited to substituted or unsubstituted divalent organic radicals such as : (a) aromatic hydrocarbon radicals having about 6 to about 20 carbon atoms and halogenated derivatives thereof; (b) straight or branched chain alkylene radicals having about 2 to about 20 carbon atoms; (c) cycloalkylene radicals having about 3 to about 20 carbon atoms, or (d) divalent radicals of the general formula (II) : 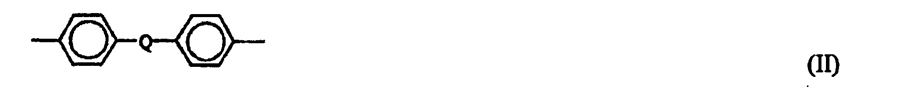 wherein Q includes but is not limited to a divalent moiety selected from the group consisting of-O-,-S-,-C (O)-; SO₂-, -C_{y}H_{2y}- (y being an integer from 1 to 5) such as -C(CH₃)₂, and halogenated derivatives thereof, including perfluoroalkylene groups. In particular embodiments R is essentially free of benzylic hydrogens. In another particular embodiment the poly(imide sulfone) is a polyetherimide sulfone and R also contains aryl sulfone and/or aryl ether linkages such that at least 50 mole % of the repeat units of any polyetherimide sulfone contain at least one aryl ether linkage, at least one aryl sulfone linkage and at least two aryl imide linkages.

In still other embodiments the linking group W in tetravalent aromatic radicals comprises a group of the formula -O-D-O-as in the formula: 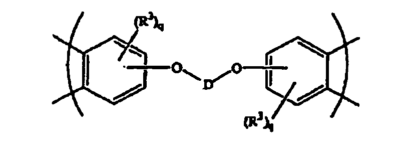 wherein R³ is selected from the group consisting of halogen, fluoro, chloro, bromo, C₁₋₃₂ alkyl, cycloalkyl, or alkenyl; C₁₋₃₂ alkoxy or alkenyloxy; or cyano, and "q" has a value of 0-3. In some particular embodiments the value of "q" is zero;
and wherein "D" is a divalent aromatic group derived from a dihydroxy substituted aromatic hydrocarbon, and has the general formula (III) : 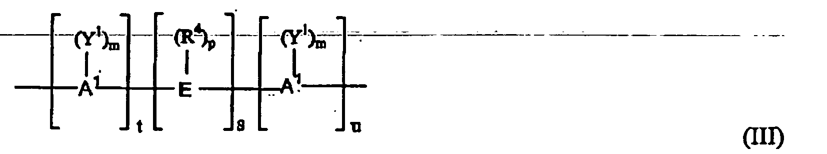 where "A¹" represents an aromatic group including, but not limited to, phenylene, biphenylene, naphthylene, etc. In some embodiments, "E" may be an alkylene or alkylidene group including, but not limited to, methylene, ethylene, ethylidene, propylene, propylidene, isopropylidene, butylene, butylidene, isobutylidene, amylene, amylidene, isoamylidene, etc. In other embodiments, when "E" is an alkylene or alkylidene group, it may also consist of two or more alkylene or alkylidene groups connected by a moiety different from alkylene or alkylidene, including, but not limited to, an aromatic linkage; a tertiary nitrogen linkage; an ether linkage; a carbonyl linkage; a silicon-containing linkage, silane, siloxy; or a sulfur-containing linkage including, but not limited to, sulphide, sulfoxide, sulfone, etc.; or a phosphorus-containing linkage including, but not limited to, phosphinyl, phosphonyl, etc.

In other embodiments, "E" may be a cycloaliphatic group non- limiting examples of which include cyclopentylidene, cyclohexylidene, 3, 3,5-trimethylcyclohexylidene, methylcyclohexylidene, bicyclo [2.2. 1] hept-2-ylidene, 1,7, 7-trimethylbicyclo [2.2. 1] hept-2-ylidene, isopropylidene, neopentylidene, cyclopentadecylidene, cyclododecylidene, and adamantylidene; a sulfur-containing linkage, including, but not limited to, sulphide, sulfoxide or sulfone ; a phosphorus-containing linkage, including, but not limited to, phosphinyl or phosphonyl; an ether linkage; a carbonyl group; a tertiary nitrogen group; or a silicon-containing linkage including, but not limited to, silane or siloxy. R⁴ independently at each occurrence comprises a monovalent hydrocarbon group including, but not limited to, alkenyl, allyl, alkyl, aryl, aralkyl, alkaryl, or cycloalkyl. In various embodiments a monovalent hydrocarbon group of R⁴ may be halogen-substituted, particularly fluoro-or chloro-substituted, for example as in dihaloalkylidene group of formula C=CZ₂, wherein each Z is hydrogen, chlorine, or bromine, subject to the provision that at least one Z is chlorine or bromine; and mixtures of the foregoing moieties.

In a particular embodiment, the dihaloalkylidene group is a dichloroalkylidene, particularly gem-dichloroalkylidene group. Y¹ independently at each occurrence may be an inorganic atom including, but not limited to, halogen (fluorine, bromine, chlorine); an inorganic group containing more than one inorganic atom including, but not limited to, nitro; an organic group including, but not limited to, a monovalent hydrocarbon group including, but not limited to, alkenyl, allyl, alkyl, aryl, aralkyl, alkaryl, or cycloalkyl, or an oxy group including, but not limited to, OR⁵ wherein R⁵ is a monovalent hydrocarbon group including, but not limited to, alkyl, aryl, aralkyl, alkaryl, or cycloalkyl; it being only necessary that Y¹ be inert to and unaffected by the reactants and reaction conditions used to prepare the polymer.

In some particular embodiments Y¹ comprises a halo group or C1-C6 alkyl group. The letter "m" represents any integer from and including zero through the number of replaceable hydrogens on A available for substitution; "p" represents an integer from and including zero through the number of replaceable hydrogens on E available for substitution; "t" represents an integer equal to at least one; "s" represents an integer equal to either zero or one; and "u" represents any integer including zero. In some particular embodiments "u" is an integer with a value of from 0 to about 5. In dihydroxy-substituted aromatic hydrocarbons "D", when more than one Y¹ substituent is present, they may be the same or different. The same holds true for the R'substituent. Where "s" is zero in formula (III) and "u" is not zero, the aromatic rings are directly joined by a covalent bond with no intervening alkylidene or other bridge. The positions of the hydroxyl groups on the aromatic nuclear residues Al can be varied in the ortho, meta, or para positions and the groupings can be in vicinal, asymmetrical or symmetrical relationship, where two or more ring carbon atoms of the hydrocarbon residue are substituted with Y¹ and hydroxyl groups.

In some particular embodiments the parameters "t" , "s" , and "u" each have the value of one; both A¹ radicals are unsubstituted phenylene radicals; and E is an alkylidene group such as isopropylidene. In some particular embodiments both A1 radicals are p-phenylene, although both may be o-or m-phenylene or one o-or m-phenylene and the other p- phenylene.
In some embodiments of dihydroxy-substituted aromatic hydrocarbons, "E" may be an unsaturated alkylidene group. Suitable dihydroxy-substituted aromatic hydrocarbons of this type include those of the formula (IV) : 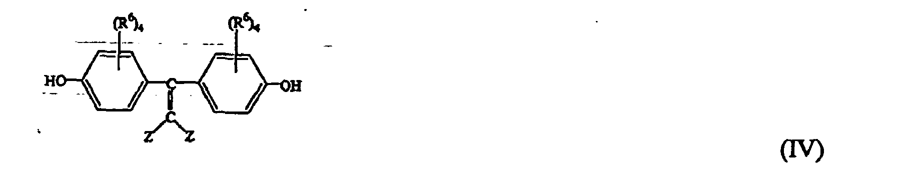 where each R is independently hydrogen, chlorine, bromine, or a C₁₋₃₀ monovalent hydrocarbon or hydrocarbonoxy group, each Z is hydrogen, chlorine or bromine, subject to the provision that at least one Z is chlorine or bromine.

Suitable dihydroxy-substituted aromatic hydrocarbons also include those of the formula (V): 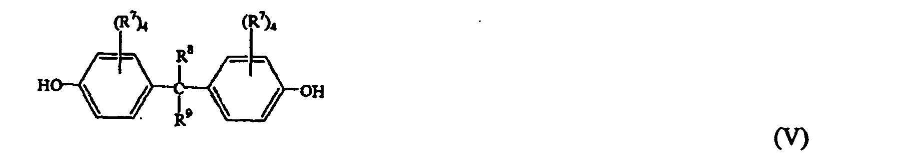 where each R⁷ is independently hydrogen, chlorine, bromine, or a C₁₋₃₀ monovalent hydrocarbon or hydrocarbonoxy group, and R⁸ and R⁹ are independently hydrogen or a C₁₋₃₀ hydrocarbon group. -

In embodiments of the present invention, dihydroxy-substituted aromatic hydrocarbons that may be used include, but are not limited to, bis (4-hydroxyphenyl) sulphide, bis (4-hydroxyphenyl) ether, bis (4- hydroxyphenyl) sulfone, bis (4-hydroxyphenyl) sulfoxide, 1,4-dihydroxybenzene, 4,4'-oxydiphenol, 2,2-bis (4-hydroxyphenyl) hexafluoropropane, 4,4'- (3, 3,5-trimethylcyclohexylidene) diphenol; 4,4'-bis (3,5-dimethyl) diphenol, 1,1-bis (4-hydroxy-3-methylphenyl) cyclohexane; 4,4-bis (4-hydroxyphenyl) heptane; 2, 4'-dihydroxydiphenylmethane; bis (2-hydroxyphenyl) methane; bis (4- hydroxyphenyl) methane; bis (4-hydroxy-5-nitrophenyl) methane; bis (4-hydroxy-2,6-dimethyl-3-methoxyphenyl) methane; 1,1-bis (4-hydroxyphenyl) ethane; 1,2-bis (4-hydroxyphenyl) ethane; 1,1-bis (4-hydroxy-2-chlorophenyl) ethane; 2,2-bis (3-phenyl- 4-hydroxyphenyl) propane; 2,2-bis (4-hydroxy-3-methylphenyl) propane; 2,2-bis (4- hydroxy-3-ethylphenyl) propane; 2,2-bis (4-hydroxy-3-isopropylphenyl) propane; 2,2-bis (4-hydroxy-3,5-dimethylphenyl) propane; 3,5, 3', 5'-tetrachloro-4,4'- dihydroxyphenyl) propane; bis (4-hydroxyphenyl) cyclohexylmethane; 2,2-bis (4-hydroxyphenyl)-1-phenylpropane; 2,4'dihydroxyphenyl sulfone; dihydroxy naphthalene; 2,6-dihydroxy naphthalene; hydroquinone; resorcinol; C₁₋₃ alkylsubstituted resorcinols ; methyl resorcinol, catechol, 1, 4-dihydroxy-3-methylbenzene; 2,2-bis (4-hydroxyphenyl) butane; 2,2-bis (4-hydroxyphenyl) -2-methylbutane; 1,1-bis (4-hydroxyphenyl) cyclohexane; 4,4'-dihydroxydiphenyl ; 2-(3- methyl-4-hydroxyphenyl-2- (4-hydroxyphenyl) propane; 2- (3, 5-dimethyl-4-hydroxyphenyl)-2-(4-hydroxyphenyl)-propane; 2-(3-methyl-4-hydroxyphenyl)-2-(3,5-dimethyl-4-hydroxyphenyl)-propane; bis (3,5-dimethylphenyl-4-hydroxyphenyl) methane; 1,1-bis (3, 5-dimethylphenyl-4-hydroxyphenyl) ethane; 2,2- bis (3,5-dimethylphenyl-4-hydroxyphenyl) propane; 2,4-bis (3,5-dimethylphenyl-4- hydroxyphenyl) -2-methylbutane; 3,3-bis (3, 5-dimethylphenyl-4- hydroxyphenyl) pentane; 1,1-bis (3,5-dimethylphenyl-4- hydroxyphenyl) cyclopentane; 1,1-bis (3,5-dimethylphenyl-4- hydroxyphenyl) cyclohexane; bis (3,5-dimethyl-4-hydroxyphenyl) sulfoxide, bis (3,5- dimethyl-4-hydroxyphenyl) sulfone and bis (3,5-dimethylphenyl-4- hydroxyphenyl) sulphide. In a particular embodiment the dihydroxy-substituted aromatic hydrocarbon comprises bisphenol A.

In some embodiments of dihydroxy-substituted aromatic hydrocarbons when the moiety "E" is an alkylene or alkylidene group, it may be part of one or more fused rings attached to one or more aromatic groups bearing one hydroxy substituent.

Suitable dihydroxy-substituted aromatic-hydrocarbons of this type include those containing indane structural units such as 3- (4-hydroxyphenyl)-1, 1, 3-trimethylindan-5-ol and 1- (4-hydroxyphenyl)-1, 3, 3-trimethylindan-5-ol. Also included among suitable dihydroxy-substituted aromatic hydrocarbons of the type comprising one or more alkylene or alkylidene groups as part of fused rings are the 2,2,2', 2'-tetrahydro-1, 1'-spirobi [1H-indene] diols, illustrative examples of which include 2,2, 2', 2'-tetrahydro-3,3, 3', 3'-tetramethyl-1, 1'-spirobi [1H-indene]-6, 6'-diol (sometimes known as "SBI"). Mixtures comprising any of the foregoing dihydroxy- substituted aromatic hydrocarbons may also be employed.

Preferred poly(imide sulfone) resins are polyetherimide sulfone resins comprising more than 1, typically about 10 to about 1000 or more, and more preferably about 10 to about 500 structural units, of the formula (VI) 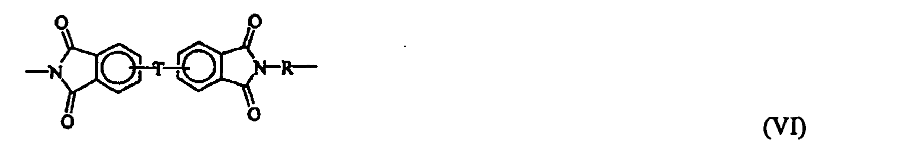 wherein the moiety R is as previously defined for formula (I) ; T is-O-or a group of the formula-O-D-O-wherein the divalent bonds of the-O-or the-O-D-O-group are in the 3,3', 3,4', 4, 3', or the 4, 4' positions, and wherein D includes, but is not limited, to divalent radicals as defined above.

In other embodiments a polyetherimide sulfone may be a copolymer, which, in addition to the etherimide units described above, further contains polyimide structural units of the formula (VII) 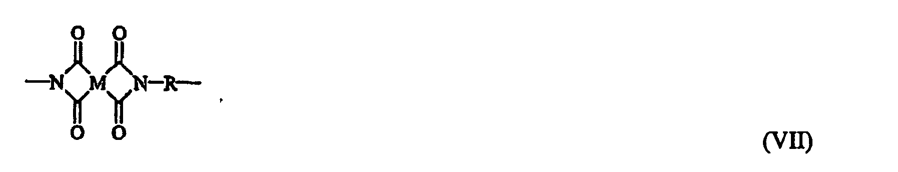 wherein R is as previously defined for formula (I) and M includes, but is not limited to, radicals of formula (VIII) chosen from 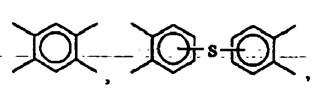 and

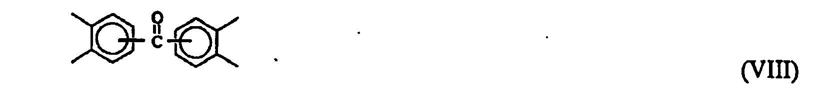

Thermoplastic poly(imide sulfone)s can be derived from reactants comprising one or more aromatic diamines or their chemically equivalent derivatives and one or more aromatic tetracarboxylic acid cyclic dianhydrides (sometimes referred to hereinafter as aromatic dianhydrides), aromatic tetracarboxylic acids, or their derivatives capable of forming cyclic anhydrides. In addition at least a portion of one or the other of or at least a portion of each of the reactants comprising aromatic diamines and aromatic dianhydrides comprises a sulfone linkage. In a particular embodiment all of one or the other of or each of the reactants comprising aromatic diamines and aromatic dianhydrides comprises a sulfone linkage. The reactants react to form polymers comprising cyclic imide linkages and sulfone linkages.

Illustrative examples of aromatic dianhydrides comprise : 4,4'-bis (3,4-dicarboxyphenoxy) diphenyl sulfone dianhydride; 4,4'-bis (2,3- dicarboxyphenoxy) diphenyl sulfone dianhydride; 4- (2,3-dicarboxyphenoxy)-4'- (3, 4-dicarboxyphenoxy) diphenyl sulfone dianhydride and mixtures thereof.

Other useful aromatic dianhydrides comprise : 2,2-bis-(4-(3,4-dicarboxyphenoxy) phenyl) propane dianhydride; 4,4'-bis (3,4- dicarboxyphenoxy) diphenyl ether dianhydride; 4,4'-bis (3,4- dicarboxyphenoxy) diphenyl sulphide dianhydride; 4,4'-bis (3,4- dicarboxyphenoxy) benzophenone dianhydride; 2,2-bis ([4- (2, 3- dicarboxyphenoxy) phenyl] propane dianhydride; 4,4'-bis (2,3-dicarboxyphenoxy) diphenyl ether dianhydride; 4,4'-bis (2,3- dicarboxyphenoxy) diphenyl sulphide dianhydride; 4,4'-bis (2,3- dicarboxyphenoxy) benzophenone dianhydride; 2- [4- (3, 4-dicarboxyphenoxy) phenyl]-2- [4- (2, 3-dicarboxyphenoxy) phenyl] propane dianhydride; 4- (2, 3-dicarboxyphenoxy)-4'- (3, 4-dicarboxyphenoxy) diphenyl ether dianhydride; 4- (2, 3-dicarboxyphenoxy)-4'- (3, 4-dicarboxyphenoxy) diphenyl sulphide dianhydride ; 4- (2, 3-dicarboxyphenoxy)-4'- (3, 4-dicarboxyphenoxy) benzophenone dianhydride ; 1,4, 5,8-naphthalenetetracarboxylic acid dianhydride; 3,4, 3', 4'-benzophenonetetracarboxylic acid dianhydride; 2,3, 3', 4'-benzophenonetetracarboxylic acid dianhydride; 3,4, 3', 4'-oxydiphthalic anhydride; 2 ; 3,3,4'-oxydiphthalic anhydride; 3,3',4,4'-biphenyltetracarboxylic acid dianhydride; 2,3, 3', 4'-biphenyltetracarboxylic acid dianhydride; 2,3, 2', 3'-biphenyltetracarboxylic acid dianhydride ; pyromellitic dianhydride; 3,4, 3', 4'-diphenylsulfonetetracarboxylic acid dianhydride; 2,3, 3', 4'-diphenylsulfonetetracarboxylic acid dianhydride; 1, 4-bis (3,4- dicarboxyphenoxy) benzene dianhydride; and 2,2-bis (3,4- dicarboxyphenyl) hexafluoropropane dianhydride. Poly(imide sulfone)s with structural units derived from mixtures comprising two or more dianhydrides are also within the scope of the invention.

In one particular embodiment the aromatic dianhydride employed in the synthesis of the poly(imide sulfone) composition comprises an aromatic bis (ether anhydride) composition comprising at least about 90 mole % 2,2-bis [4- (3, 4-dicarboxyphenoxy) phenyl] propane dianhydride, or at least about 95 mole % 2,2-bis [4- (3, 4-dicarboxyphenoxy) phenyl] propane dianhydride based on total moles dianhydride present. Sometimes hereinafter this particular aromatic bis (ether anhydride) composition is referred to as bisphenol A dianhydride or "BPADA". In other embodiments preferred aromatic dianhydrides are bisphenol A dianhydride, pyromellitic dianhydride, biphenyltetracarboxylic acid dianhydride, oxydiphthalic anhydride and mixtures thereof.

In various embodiments suitable aromatic diamines comprise a divalent organic radical selected from aromatic hydrocarbon radicals having 6 to about 24 carbon atoms and substituted derivatives thereof. In various embodiments said aromatic hydrocarbon radicals may be monocyclic, polycyclic or fused.

In some embodiments suitable aromatic diamines comprise divalent aromatic hydrocarbon radicals of the general formula (IX) 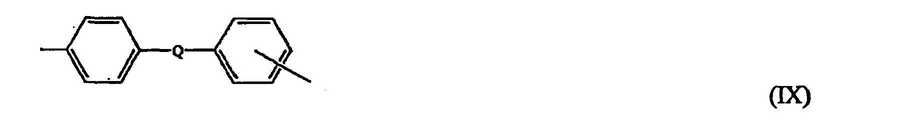 wherein the unassigned positional isomer about the aromatic ring is either meta or para to Q, and Q is a covalent bond or a member selected from the group consisting of formulas (X): 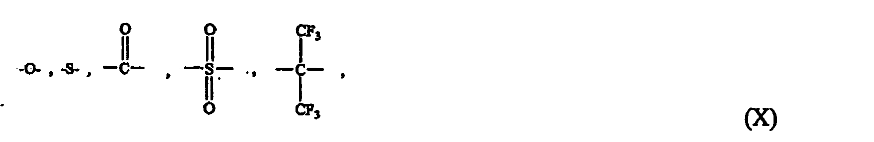 and an alkylene or alkylidene group of the formula C_{y}H_{2y}, wherein y is an integer from 1 to 5 inclusive. In some particular embodiments y has the value of one or two. Illustrative linking groups include, but are not limited to, methylene, ethylene, ethylidene, vinylidene, halogen-substituted vinylidene, and isopropylidene. In other particular embodiments the unassigned positional isomer about the aromatic ring in formula (IX) is para to Q.

In various embodiments the two amino groups in aromatic diamines are separated by at least two and sometimes by at least three ring carbon atoms. When the amino group or groups are located in different aromatic rings of a polycyclic aromatic moiety, they are often separated from the direct linkage or from the linking moiety between any two aromatic rings by at least two and sometimes by at least three ring carbon atoms. In illustrative non-limiting examples aromatic diamines comprise aromatic hydrocarbon radicals including, but not limited to, phenyl, biphenyl, naphthyl, bis (phenyl) -2, 2-propane, and their substituted derivatives. In particular embodiments substituents include one or more halogen groups, such as fluoro, chloro, or bromo, or mixtures thereof; or one or more straight-chain-, branched-, or cycloalkyl-groups having from 1 to 22 carbon atoms, such as methyl, tert-butyl, or mixtures thereof. In particular embodiments substituents for aromatic hydrocarbon radicals, when present, are selected from the group consisting of halogens, chloro, ethers, sulfones, perfluoroalkyl, methyl, t-butyl and mixtures thereof. In other particular embodiments said aromatic hydrocarbon radicals are unsubstituted.

In some particular embodiments suitable aromatic diamines comprise meta-phenylenediamine; para-phenylenediamine; mixtures of meta-and para-phenylenediamine; isomeric 2-methyl-and 5-methyl-4, 6-diethyl-1, 3-phenylenediamines or their mixtures; bis (4-aminophenyl)-2, 2-propane; bis (2-chloro-4-amino-3,5-diethylphenyl) methane, 4,4'-diaminodiphenyl, 3,4'-diaminodiphenyl, 4, 4'-diaminodiphenyl ether (sometimes referred to as 4, 4'-oxydianiline); 3, 4'-diaminodiphenyl ether, 3,3'-diaminodiphenyl ether, 4, 4'-diaminodiphenyl sulfone, 3,4'-diaminodiphenyl sulfone, 3,3'-diaminodiphenyl sulfone,4,4'-diaminodiphenyl sulphide; 3,4'-diaminodiphenyl sulphide; 4,4'-diaminodiphenyl ketone, 3, 4'-diaminodiphenyl ketone, 4, 4'-diaminodiphenylmethane (commonly named 4,4'-methylenedianiline) ; 4,4'-bis (4-aminophenoxy) biphenyl, 4,4'-bis (3-aminophenoxy) biphenyl, 1,5-diaminonaphthalene ; 3,3-dimethylbenzidine; 3,3-dimethoxybenzidine; benzidine; m- xylylenediamine; bis (aminophenoxy) fluorene, bis (aminophenoxy) benzene, 1,3- bis (3-aminophenoxy) benzene, 1,3-bis (4-aminophenoxy) benzene, 1,4-bis (4-aminophenoxy) benzene, bis (aminophenoxy) phenyl sulfone, bis (4- (4-aminophenoxy) phenyl) sulfone, bis (4- (3-aminophenoxy) phenyl) sulfone, diaminobenzanilide, 3, 3'-diaminobenzophenone, 4, 4'-diaminobenzophenone, 2,2'-bis (4- (4-aminophenoxy) phenyl) propane, 2,2-bis [4- (4- aminophenoxy) phenyl] hexafluoropropane, 4,4'- bis (aminophenyl) hexafluoropropane, 1, 3-diamino-4-isopropylbenzene; 1;2-bis(3-aminophenoxy)-ethane;2,4-bis (beta-amino-t-butyl) toluene; bis (p-beta-methyl-o- aminophenyl) benzene; bis (p-beta-amino-t-butylphenyl) ether and 2,4- toluenediamine. Mixtures of two or more diamines may also be employed. The most preferred diamines are meta-and para-phenylene diamines, 4,4'- diaminodiphenyl sulfone and oxydianiline.

The preferred aromatic diamines are free of benzylic hydrogens and also contain aryl sulfone linkages. Diaminodiphenyl sulfone (DDS), bis(aminophenoxy phenyl) sulfones-(BAPS) and mixtures thereof are particularly preferred aromatic diamines.

The sulfone groups contained in the poly(imide sulfone) are generally contained in tetravalent linker V and/or in the divalent radical R.

A first suitable tetravalent linker V including a sulfone group is 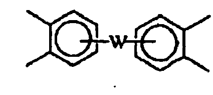 wherein W is -SO₂-.

Another suitable tetravalent linker V including a sulfone group is 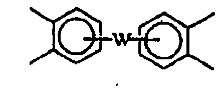 wherein W is an -O-D-O-group, wherein D is 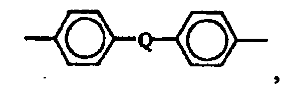 wherein Q is -SO₂-.

Still another suitable tetravalent linker V including a sulfone group is 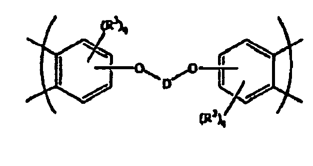 wherein R³ is selected from the group consisting of halogen, fluoro, chloro, bromo, C-32 alkyl, cycloalkyl, or alkenyl; Cl-32 alkoxy or alkenyloxy; or cyano, and "q" has a value of 0-3 ;
wherein "D" is a divalent aromatic group derived from a dihydroxy substituted aromatic hydrocarbon, and has the general formula : 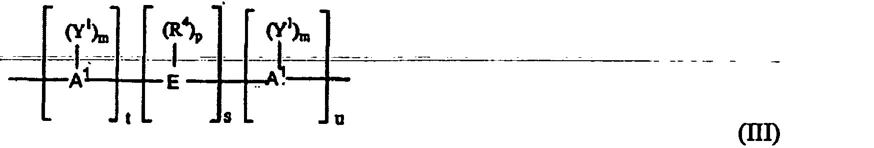 where
- either E consists of two or more alkylene or alkylidene groups connected by sulfone moiety, or E is a sulfone linkage ;
- A¹ represents an aromatic group including, but not limited to, phenylene, biphenylene, naphthylene, etc.
- R⁴ independently at each occurrence comprises a monovalent hydrocarbon group including, but not limited to, alkenyl, allyl, alkyl, aryl, aralkyl, alkaryl, or cycloalkyl ;
- Y¹ independently at each occurrence may be an inorganic atom including, but not limited to, halogen (fluorine, bromine, chlorine); an inorganic group containing more than one inorganic atom including, but not limited to, nitro; an organic group including, but not limited to, a monovalent hydrocarbon group including, but not limited to, alkenyl, allyl, alkyl, aryl, aralkyl, alkaryl, or cycloalkyl, or an oxy group including, but not limited to, OR⁵ wherein R⁵ is a monovalent hydrocarbon group including, but not limited to, alkyl, aryl, aralkyl, alkaryl, or cycloalkyl; it being only necessary that Y¹ be inert to and unaffected by the reactants and reaction conditions used to prepare the polymer;
- the letter "m" represents any integer from and including zero through the number of replaceable hydrogens on A available for substitution; "p" represents an integer from and including zero through the number of replaceable hydrogens on E available for substitution; "t" represents an integer equal to at least one; "s" represents an integer equal to one and only one ; and "u" represents any integer including zero.

A suitable divalent radical R including a sulfone group is 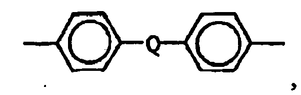 wherein Q is -SO₂-.

Preferably, the divalent radical R contains a sulfone group, and more preferably the divalent radical R is 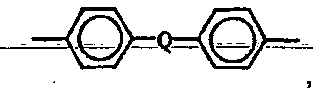 wherein Q is -SO₂-.

On the other hand, the tetravalent linker V is preferably free of sulfone group.

Poly(imide sulfones) especially suitable as the polymer material (P) are commercially available notably from SOLVAY ADVANCED POLYMERS, L.L.C. as EXTEM^{®}.

### Blends of poly(biphenyl ether sulfone) and poly(imide sulfone)

In certain preferred embodiments, the polymer material (P) is a blend composed of a poly(biphenyl ether sulfone) and at least one poly(imide sulfone), hereinafter referred to as blend (B). With respect to blend (B): the poly(biphenyl ether sulfone) contained in the blend (B) meets advantageously all the characteristics of the poly(biphenyl ether sulfone)s as above described, at any level of preference; in particular, it is preferably, a polyphenylsulfone ; the poly(imide sulfone) contained in the blend (B) meets advantageously all the characteristics of the poly(imide sulfone) as above described, at any level of preference ;the weight of the poly(biphenyl ether sulfone), based on the total weight of the blend (B) [i.e. based on the weight of the poly(biphenyl ether sulfone) plus the weight of the poly(imide sulfone)] is advantageously of at least 15 %, preferably at least 25 % , more preferably at least 35 %, still more preferably at least 40 %, and most preferably at least 45 % ; besides, the weight of the poly(biphenyl ether sulfone), based on the total weight of the blend (B) is advantageously of at most 90 %, preferably at most 80 %, and still more preferably at most 70 % ; in certain embodiments, it is of at most 55 % ; in certain other embodiments, it is above 55 %, and possibly of at least 60%.

In certain particular embodiment, the polymer material (P) may also be a copolymer comprising both recurring units of the poly(biphenyl ether sulfone) and poly(imide sulfone) as above described. It may be a block or a random copolymer. In such a case, the copolymer comprises more than 50 wt. % of recurring units corresponding to the poly(biphenyl ether sulfone) recurring units as above described.

### EXAMPLES

Materials used were polyethersulfone (PESU, Radel^{®} A 300, in pellets), polyphenylsulfone (PPSU, Radel^{®} R 5100, in pellets) and poly(phenylene sulphide) (PPS, purchased from Toray).

Fiber spinning trial was conducted on a machine including a standard 1.5" single screw extruder with L/D of 24:1 and a compression ration of 3:1, two melt pumps and four drawing rollers. The screw had feeding, transition and metering zones of 7.5/13.5/15 inch lengths without a mixer. Each melt pump fed the material into a spinneret having two clusters each of 20 holes of 0.8 mm in diameter for a total of 80 strands. The total material residence time was about 10 minutes at 5 lbs/hr output rate. The strands were pulled by the four rollers, whose speeds and temperature were controlled independently. The first roller drew the strands at the molten state of the polymer ("hot" draw). The strand drawing from rest of the rollers took place at a solid state of the polymer ("cold" draw). Four screen packs of 325x60x20x20x20 mesh combination were used before the spinneret.

### Thermal oxidative stability

Thermal stability property was measured through % tenacity retention of a fiber sample after exposed in a hot air oven of 170°C with no tension applied to the fiber for a prolong period.

All fiber samples were water-washed to remove the finish chemical prior to the oven exposure. DPF values of the PESU and PPSU samples were of 6 g/9000m and of 4 g/9000m for the PPS samples. Results are shown in Table 1.

**Table 1: Thermal oxidative stability results**

| | **Tenacity retention, %** | | |
|---|---|---|---|
| **Time, days** | **PESU** | **PPSU** | **PPS** |
| 0 | 100 | 100 | 100 |
| 16 | 97.4 | 107.0 | 97.7 |
| 58 | 92.2 | 108.1 | 83.0 |
| 127 | 90.2 | 95.4 | 71.0 |

The fibers, prepared from PPSU and PESU, do not show any noticed tenacity reduction after aging for 127 days. The fibers, prepared from PPS, however, show significant tenacity reduction (∼ 30%) during the early stage of aging.

### Chemical resistance against inorganic reagents

Fiber chemical resistance was evaluated by immersing the fiber in a testing reagent for 24 hours and then determining tensile properties and in particular tenacity retention of the chemical treated fiber. Details of the test procedure are given in the following:

Fibers were winded on a 1" diameter glass tube (2/3 way down into the bottom) and rinsed for 1 minute to remove the finish and then dried the fiber with paper towel. Six tubes each loaded with different fiber samples were immersed into a glass 1000 ml wide-mouth jar filled with a chemical reagent. The jar was capped and left inside a hood at room temperature for 24 hours. The tubes were taken out from the jar, and rinsed with deionized water to rinse the remaining chemical reagent from the fiber for initial cleaning. The tubes were then dipped into a water bath as a second step clean up. The fibers were then conditioned for a day before running tensile tests.

Details of chemical resistant results are given in Table 2. The PPS fibers dissolve into a concentrated nitric acid solution of 50 wt. % at room temperature and have reduced tenacity retention when treated in a less concentrated nitric acid solution at an elevated temperature. The PESU and PPSU fibers show superior resistance to strong base and acid solutions at room temperature, and to intermediate concentrated base and acid solutions at an elevated temperature. PPSU fibers still feature improved chemical resistance compared to that of PESU fibers.

**Table 2: Tenacity retention upon chemical treatment**

| | **PESU** | **PPSU** | **PPS** |
|---|---|---|---|
| Denier, g/9000m | 345 | 550 | 400 |
| DPF, g/9000m | 2.7 | 6.9 | 4.0 |
| **Test temperature: 23°C** | | | |
| Sulfuric acid, 50% | 96 | 100 | 87 |
| Nitric acid, 50% | 80 | 108 | dissolved |
| **Test temperature: 80°C** | | | |
| Sulfuric acid, 20% | 96 | 100 | 89 |
| Nitric acid, 20% | 95 | 99 | 66 |
| KOH, 37% | 90 | 90 | 84 |

## Claims

1. Use of a filter assembly for the filtration of a coal combustion flue gas,
wherein said filter assembly comprises a frame and a fabric mounted on said frame,
wherein said fabric comprises fibers (F) comprising at least one poly(biphenyl ether sulfone), and
wherein said poly(biphenyl ether sulfone) is a polycondensate of which more than 50 wt. % of the recurring units are recurring units (R1) of one or more formulae containing at least one p-biphenylene
group 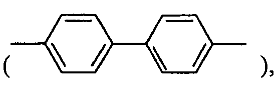 at least one ether group (-O-) and at least one sulfone group (-SO₂-).

2. Use according to claim 1, wherein said coal combustion flue gas comprises above 5 vol. % of CO₂, more than 400 ppm of sulfur oxides and more than 125 ppm of nitrogen oxides.

3. Use according to claim 1 or 2, wherein said poly(biphenyl ether sulfone) is a polyphenylsulfone homopolymer.

4. Use according to any one of claims 1 to 3, wherein said filter assembly does not breakdown oxidatively in the presence of sulfuric acid.

5. Use according to any one of claims 1 to 4, wherein said filter assembly does not breakdown in a temperature environment of around 170°C.

6. Use according to any one of claims 1 to 5, wherein said filter assembly comprises surface active fibers.

7. Use according to any one of claims 1 to 6, wherein said coal combustion flue gas is a coal burning power generation plant flue gas.

8. Use of a filtration system for the filtration of a coal combustion flue gas,
wherein said filtration system comprises a plurality of filter assemblies and a gas inlet receiving said coal combustion flue gas,
wherein at least one of said filter assemblies comprises a frame and a fabric mounted on said frame,
wherein said fabric comprises fibers (F) comprising at least one poly(biphenyl ether sulfone), and
wherein said poly(biphenyl ether sulfone) is a polycondensate of which more than 50 wt. % of the recurring units are recurring units (R1) of one or more formulae containing at least one p-biphenylene group 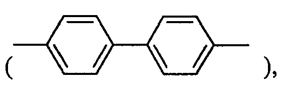 at least one ether group (-O-) and at least one sulfone group (-SO₂-).

9. Use according to claim 8, wherein each of the filter assemblies comprises said frame and said fabric.

10. Use according to claim 8 or 9, wherein said coal combustion flue gas comprises above 5 vol. % of CO₂, more than 400 ppm of sulfur oxides and more than 125 ppm of nitrogen oxides.

11. Use according to any one of claims 8 to 10, wherein said poly(biphenyl ether sulfone) is a polyphenylsulfone homopolymer.

12. Use according to any one of claims 8 to 11, wherein said coal combustion flue gas is a coal burning power generation plant flue gas.

## Patentansprüche

1. Verwendung einer Filteranordnung für die Filtration eines Kohleverbrennungs-Abzugsgases,
wobei die Filteranordnung einen Rahmen und ein auf dem Rahmen montiertes Gewebe umfasst,
wobei das Gewebe Fasern (F), umfassend mindestens ein Poly(biphenylethersulfon), umfasst, und
wobei das Poly(biphenylethersulfon) ein Polykondensat ist, von dem mehr als 50 Gew.-% der Wiederholungseinheiten Wiederholungseinheiten (R1) mit einer oder mehreren Formeln sind, die mindestens eine p-Biphenylengruppe 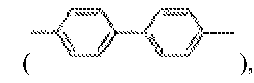 mindestens eine Ethergruppe (-O-) und mindestens eine Sulfongruppe (-SO₂-) enthalten.

2. Verwendung gemäß Anspruch 1, wobei das Kohleverbrennungs-Abzugsgas mehr als 5 Vol.- % CO₂, mehr als 400 ppm Schwefeloxide und mehr als 125 ppm Stickstoffoxide umfasst.

3. Verwendung gemäß Anspruch 1 oder 2, wobei das Poly(biphenylethersulfon) ein Polyphenylsulfon-Homopolymer ist.

4. Verwendung gemäß einem der Ansprüche 1 bis 3, wobei die Filteranordnung in Gegenwart von Schwefelsäure oxidativ nicht zusammenbricht.

5. Verwendung gemäß einem der Ansprüche 1 bis 4, wobei die Filteranordnung in einer Temperaturumgebung von um die 170°C nicht zusammenbricht.

6. Verwendung gemäß einem der Ansprüche 1 bis 5, wobei die Filteranordnung oberflächenaktive Fasern umfasst.

7. Verwendung gemäß einem der Ansprüche 1 bis 6, wobei das Kohleverbrennungs-Abzugsgas ein Abzugsgas einer Kohleverbrennungs-Energieerzeugungsanlage ist.

8. Verwendung eines Filtrationssystems für die Filtration eines Kohleverbrennungs-Abzugsgases,
wobei das Filtrationssystem eine Vielzahl an Filteranordnungen und einen Gaseinlass, welcher das Kohleverbrennungs-Abzugsgas aufnimmt, umfasst,
wobei mindestens eine der Filteranordnungen einen Rahmen und ein auf dem Rahmen montiertes Gewebe umfasst,
wobei das Gewebe Fasern (F) umfasst, die mindestens ein Poly(biphenylethersulfon) umfassen, und
wobei das Poly(biphenylethersulfon) ein Polykondensat ist, von dem mehr als 50 Gew.- % der Wiederholungseinheiten Wiederholungseinheiten (R1) mit einer oder mehreren Formeln sind, die mindestens eine p-Biphenylengruppe 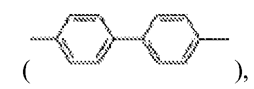 mindestens eine Ethergruppe (-O-) und mindestens eine Sulfongruppe (-SO₂-) enthalten.

9. Verwendung gemäß Anspruch 8, wobei jede der Filteranordnungen den Rahmen und das Gewebe umfasst.

10. Verwendung gemäß Anspruch 8 oder 9, wobei das Kohleverbrennungs-Abzugsgas mehr als 5 Vol.- % CO₂, mehr als 400 ppm Schwefeloxide und mehr als 125 ppm Stickstoffoxide umfasst.

11. Verwendung gemäß einem der Ansprüche 8 bis 10, wobei das Poly(biphenylethersulfon) ein Polyphenylsulfon-Homopolymer ist.

12. Verwendung gemäß einem der Ansprüche 8 bis 11, wobei das Kohleverbrennungs-Abzugsgas ein Abzugsgas einer Kohleverbrennungs-Energieerzeugungsanlage ist.

## Revendications

1. Utilisation d'un assemblage de filtre pour la filtration d'un gaz de combustion de charbon,
dans laquelle ledit assemblage de filtre comprend un cadre et un tissu monté sur ledit cadre,
dans laquelle ledit tissu comprend des fibres (F) comprenant au moins une poly(biphényléthersulfone), et
dans laquelle ladite poly(biphényléthersulfone) est un polycondensat dont plus de 50 % en poids des motifs récurrents sont des motifs récurrents (R1) d'une ou plusieurs formules contenant au moins un groupe p-biphénylène 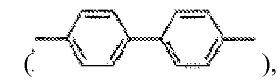 au moins un groupe éther (-O-) et au moins un groupe sulfone (-SO₂-).

2. Utilisation selon la revendication 1, dans laquelle ledit gaz de combustion de charbon comprend plus de 5 % en volume de CO₂, plus de 400 ppm d'oxydes de soufre et plus de 125 ppm d'oxydes d'azote.

3. Utilisation selon la revendication 1 ou 2, dans laquelle ladite poly(biphényléthersulfone) est un homopolymère de polyphénylsulfone.

4. Utilisation selon l'une quelconque des revendications 1 à 3, dans laquelle ledit assemblage de filtre ne se décompose pas par oxydation en présence d'acide sulfurique.

5. Utilisation selon l'une quelconque des revendications 1 à 4, dans laquelle ledit assemblage de filtre ne se décompose pas dans un environnement à une température voisine de 170°C.

6. Utilisation selon l'une quelconque des revendications 1 à 5, dans laquelle ledit assemblage de filtre comprend des fibres ayant une activité superficielle.

7. Utilisation selon l'une quelconque des revendications 1 à 6, dans laquelle ledit gaz de combustion de charbon est un gaz brûlé provenant d'une centrale à charbon.

8. Utilisation d'un système de filtration pour la filtration d'un gaz de combustion de charbon,
dans laquelle ledit système de filtration comprend une pluralité d'assemblages de filtres et une entrée de gaz recevant ledit gaz de combustion de charbon,
dans laquelle au moins un desdits assemblages de filtres comprend un cadre et un tissu monté sur ledit cadre,
dans laquelle ledit tissu comprend des fibres (F) comprenant au moins une poly(biphényléthersulfone), et
dans laquelle ladite poly(biphényléthersulfone) est un polycondensat dont plus de 50 % en poids des motifs récurrents sont des motifs récurrents (R1) d'une ou plusieurs formules contenant au moins un groupe p-biphénylène 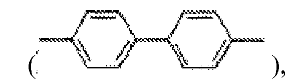 au moins un groupe éther (-O-) et au moins un groupe sulfone (-SO₂-).

9. Utilisation selon la revendication 8, dans laquelle chacun des assemblages de filtres comprend ledit cadre et ledit tissu.

10. Utilisation selon la revendication 8 ou 9, dans laquelle ledit gaz de combustion de charbon comprend plus de 5 % en volume de CO₂, plus de 400 ppm d'oxydes de soufre et plus de 125 ppm d'oxydes d'azote.

11. Utilisation selon l'une quelconque des revendications 8 à 10, dans laquelle ladite poly(biphényléthersulfone) est un homopolymère de polyphénylsulfone.

12. Utilisation selon l'une quelconque des revendications 8 à 11, dans laquelle ledit gaz de combustion de charbon est un gaz brûlé provenant d'une centrale à charbon.
